# EUROPEAN PATENT APPLICATION

(11) **EP 3 470 888 A1**
(43) Date of publication of application: **17.04.2019**
(21) Application number: 18199577.0
(22) Date of filing: 19.05.2014
(51) Int. Cl.: G01V 3/28, G01V 3/34

(54) **A MAGNETIC INDUCTION SENSOR WITH AN ELECTRO-OPTICAL TRANSDUCER AND RELATED METHODS AND SYSTEMS**

(62) Divisional of application: 14892504.3
(71) Applicant: Halliburton Energy Services Inc., Houston, Texas 77072 (US)
(72) Inventor: WILSON, Glenn A., Houston, TX 77009 (US); MANDVIWALA, Tasneem A., Katy, TX 77494 (US); DONDERICI, Burkay, Pittsford, NY 14534 (US); FOUDA, Ahmed, Houston, TX 77070 (US); SAMSON, Etienne, Cypress, TX 77433 (US)
(74) Representative: Hoffmann Eitle

(57) **Abstract**

Electromagnetic (EM) measurement systems and methods for a downhole environment are described herein. An example system includes an optical fiber, an EM source to emit an EM field, and a magnetic induction sensor. The magnetic induction sensor comprises a coil and an electro-optical transducer coupled to the coil and the optical fiber. The electro-optical transducer generates a light beam or modulates a source light beam in the optical fiber in accordance with a voltage induced in the coil by the EM field. An example method includes positioning an optical fiber and magnetic induction sensor in the downhole environment, the magnetic induction sensor having a coil and an electro-optical transducer coupled to the coil and the optical fiber. The method also includes emitting an EM field and generating a light beam or modulating a source light beam, by the electro-optical transducer, in the optical fiber in accordance with a voltage induced in the coil by the EM field.

## Description

### BACKGROUND

During oil and gas exploration and production, many types of information are collected and analyzed. The information is used to determine the quantity and quality of hydrocarbons in a reservoir, and to develop or modify strategies for hydrocarbon production. One technique for collecting relevant information involves monitoring electromagnetic (EM) fields with magnetic induction sensors.

Known magnetic induction sensors have a wire coil and related circuitry to measure the voltage induced in the wire coil by a time-varying magnetic flux density. The measured voltages are communicated to a recording unit and/or processing unit via an electrical telemetry system, where one or more stages of amplification are typically employed. Such approaches require an undesirably large number of powered components downhole with commensurate vulnerabilities to component failure and a correspondingly inadequate durability.

### BRIEF DESCRIPTION OF THE DRAWINGS

Accordingly, there are disclosed in the drawings and the following description various electromagnetic (EM) field monitoring systems and methods employing a magnetic induction sensor configuration having an electro-optical transducer. In the drawings:
FIGS. 1A-1D depict various illustrative EM field survey environments.
FIG. 2 shows an illustrative magnetic induction sensor.
FIG. 3 shows an illustrative equivalent circuit schematic for a magnetic induction sensor.
FIGS. 4A and 4B show illustrative magnetic induction sensor package arrangements.
FIGS. 5A-5L show illustrative electro-optical transducers.
FIG. 6 shows an illustrative optical sensor interrogation system.
FIG. 7 shows an illustrative EM field monitoring method.

It should be understood, however, that the specific embodiments given in the drawings and detailed description do not limit the disclosure. On the contrary, they provide the foundation for one of ordinary skill to discern the alternative forms, equivalents, and modifications that are encompassed together with one or more of the given embodiments in the scope of the appended claims.

### DETAILED DESCRIPTION

Certain disclosed device, system, and method embodiments are directed to electromagnetic (EM) field monitoring systems and methods employing a magnetic induction sensor configuration having an electro-optical transducer. For example, an EM field monitoring system for a downhole environment may include an optical fiber, an EM source to emit an EM field, and a magnetic induction sensor. In at least some embodiments, the magnetic induction sensor comprises a coil and an electro-optical transducer coupled to the coil and the optical fiber. In operation, one or more EM sources are activated in turn to induce EM fields in a formation to be surveyed, where the EM fields are influenced by the distribution of resistivity in the formation. Each of the magnetic induction sensors measures the resulting fields in their vicinity. Each sensor's electro-optical transducer generates a light beam or modulates a source light beam in the optical fiber in accordance with a voltage induced in the sensor's coil in presence of an EM field. The generated light beams or modulated source light beams output from each magnetic induction sensor are conveyed to earth's surface, where the EM field measurements are recovered. The recovered EM field measurements can be analyzed (*e.g*., inverted) to determine parameters of interests such as the distribution of resistivity, the position and movement of fluids around the borehole(s), and related images. In some embodiments, a plurality of such magnetic induction sensors are deployed along an optical fiber. The deployment of such magnetic induction sensors may occur, for example, during logging-while drilling (LWD) operations, wireline logging operations, and/or permanent well installations (*e.g*., production wells, injection wells, or monitoring wells).

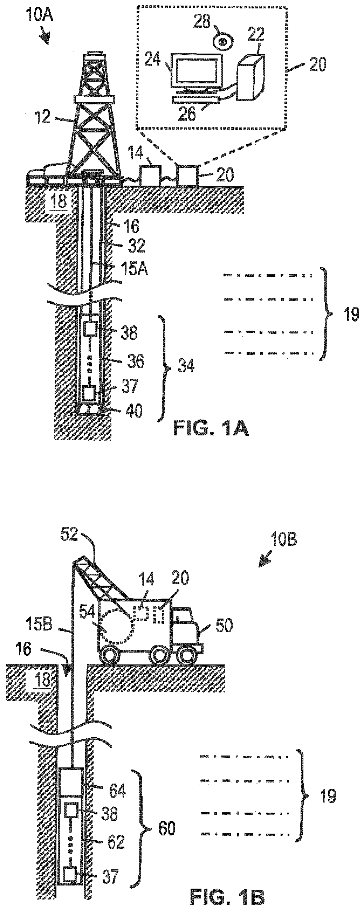

To provide some context for the disclosure, FIGS. 1A-1D show illustrative EM field survey environments including LWD, wireline logging, permanent well installations, and cross-well environments. FIG. 1A shows an illustrative LWD survey environment 10A. In FIG. 1A, a drilling assembly 12 enables a wired drill string 32 to be lowered and raised in a borehole 16 that penetrates formations 19 of the earth 18. At the lower end of the wired drill string 32, a bottomhole assembly 34 with a drill bit 40 removes material and penetrates formations 19 using known drilling techniques. The bottomhole assembly 34 also includes a logging tool 36 with magnetic induction sensor(s) 38 and EM source(s) 37 to obtain EM field measurements as described herein. Additionally or alternatively, the magnetic induction sensors 38 monitor ambient EM fields rather than those emitted from EM source(s) 37. The logging tool 36 may also include electronics for data storage, communication, etc. The EM field measurements obtained by magnetic induction sensor(s) 38 are conveyed to earth's surface and/or are stored by the logging tool 36. In either case, EM field measurements as a function of position and/or time may be analyzed to determine properties of formations 19. For example, the EM field measurements may be used to derive a resistivity log as a function of position, to track movement of downhole fluids, and/or other formation properties. The logs and/or formation properties may be displayed to an operator.

In FIG. 1A, a cable 15A is represented. The cable 15A may take different forms and includes embedded electrical conductors and/or optical waveguides (*e.g*., fibers) to enable interrogation or monitoring of magnetic induction sensors 38. Further, the cable 15A may enable transfer of power and/or communications between the bottomhole assembly 34 and earth's surface. For example, the EM source(s) 37 may be controlled and powered via the cable 15A. The cable 15A may be integrated with, attached to, or inside the drill string 32. In at least some embodiments, cable 15A may be supplemented by or replaced at least in part by mud pulse telemetry or other wireless communication techniques.

In FIG. 1A, an interface 14 at earth's surface receives the EM field measurements via cable 15A or another telemetry channel and conveys the EM field measurements to a computer system 20. In some embodiments, the surface interface 14 and/or the computer system 20 may perform various operations such as converting received signals from one format to another, storing the EM field measurements, processing the measurements, deriving logs from the measurements, and/or displaying logs or other measurement data. In at least some embodiments, the computer system 20 includes a processing unit 22 that performs EM field measurement analysis operations by executing software or instructions obtained from a local or remote non-transitory computer-readable medium 28. The computer system 20 also may include input device(s) 26 (*e.g.,* a keyboard, mouse, touchpad, etc.) and output device(s) 24 (*e.g.,* a monitor, printer, etc.). Such input device(s) 26 and/or output device(s) 24 provide a user interface that enables an operator to interact with the logging tool 36 and/or software executed by the processing unit 22. For example, the computer system 20 may enable an operator may select EM field measurement analysis options, to view collected measurements, to view analysis results, and/or to perform other tasks.

At various times during the drilling process, the drill string 32 shown in FIG. 1A may be removed from the borehole 16. With the drill string 32 removed, wireline logging operations may be performed as shown in the wireline logging survey environment 10B of FIG. 1B. In FIG. 1B, a wireline logging string 60 is suspended in borehole 16 that penetrates formations 19 of the earth 18. For example, the wireline logging string 60 may be suspended by a cable 15B having conductors and/or optical fibers for conveying power to the wireline logging string 60. The cable 15B may also be used as a communication interface for uphole and/or downhole communications. For example, the EM source(s) 37 may be controlled and powered via the cable 15B. Further, the cable 15B enables monitoring or interrogation of the magnetic induction sensors 38. In at least some embodiments, the cable 15B wraps and unwraps as needed around cable reel 54 when lowering or raising the wireline logging string 60. As shown, the cable reel 54 may be part of a movable logging facility or vehicle 50 having a cable guide 52.

The wireline logging string 60 includes logging tool(s) 64 and a logging tool 62 with magnetic induction sensor(s) 38 and EM source(s) 37 to obtain EM field measurements. The logging tool 62 may also include electronics for data storage, communication, etc. The EM field measurements obtained by magnetic induction sensor(s) 38 are conveyed to earth's surface and/or are stored by the logging tool 62. As previously noted, EM field measurements as a function of position or time may be analyzed to determine formation properties as described herein. At earth's surface, a surface interface 14 receives the EM field measurements via the cable 15B and conveys the EM field measurements to a computer system 20 for analysis.

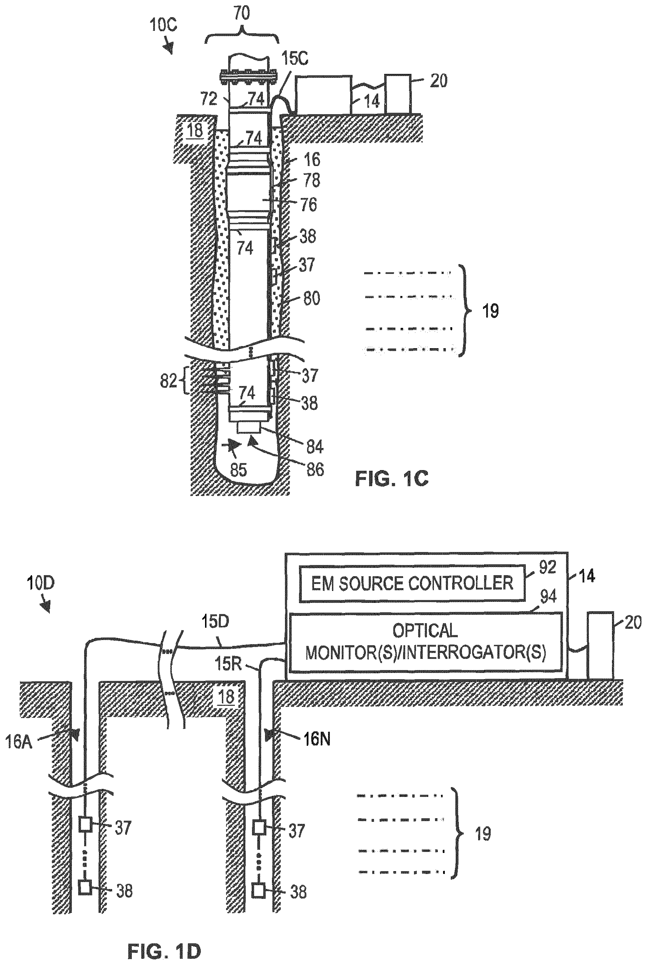

FIG. 1C shows a permanent well survey environment 10C, where well 70 is equipped with magnetic induction sensors 38 and EM sources 37 to obtain EM field measurements. In the permanent well survey environment 10C, a drilling rig has been used to drill borehole 16 that penetrates formations 19 of the earth 18 in a typical manner (*see e.g.,* FIG. 1A). Further, a casing string 72 is positioned in the borehole 16. The casing string 72 of well 70 includes multiple tubular casing sections (usually about 40 feet long) connected end-to-end by couplings 76. It should be noted that FIG. 1C is not to scale, and that casing string 72 typically includes many such couplings 76. Further, the well 70 includes cement slurry 80 that has been injected and allowed to set in the annular space between the outer surface of the casing string 72 and the inner surface of the borehole 16. Further, a production tubing string 84 has been positioned in an inner bore of the casing string 72.

In FIG. 1C, the well 70 corresponds to a production well and is adapted to guide a desired fluid (*e.g*., oil or gas) from a bottom of the borehole 16 to a surface of the earth 18. Accordingly, perforations 82 may be formed at the bottom of the borehole 16 to facilitate the flow of a fluid 85 from a surrounding formation into the borehole 16 and thence to earth's surface via an opening 86 at the bottom of the production tubing string 84. Note that well configuration of FIG. 1C is illustrative and not limiting on the scope of the disclosure. Other examples of permanent well installations include injection wells and monitoring wells.

In the embodiment of FIG. 1C, a cable 15C having electrical conductors and/or optical fibers is used to enable monitoring or interrogation of the magnetic induction sensors 38. Further, the EM source(s) 37 may be controlled and powered via the cable 15C. As shown, the cable 15C extends along an outer surface of the casing string 72 and is held against the outer surface of the casing string 72 at spaced apart locations by multiple bands 74 that extend around the casing string 72. A protective covering 78 may be installed over the cable 15C at each of the couplings 76 of the casing string 72 to prevent the cable 15C from being pinched or sheared by the coupling's contact with the borehole wall. The protective covering 78 may be held in place, for example, by two of the bands 74 installed on either side of coupling 76. In at least some embodiments, the cable 15C terminates at surface interface 14, which conveys EM field measurements obtained from one or more of the magnetic induction sensors 38 to a computer system 20 for analysis.

FIG. 1D shows a multi-well survey environment 10D, in which magnetic induction sensors 38 and EM sources 37 are distributed in multiple boreholes 16A-16N that penetrate formations 19 of the earth 18. The magnetic induction sensors 38 and EM sources 37 may be positioned in the boreholes 16A-16N via LWD operations (*see e.g.,* FIG. 1A), wireline logging operations (*see e.g.,* FIG. 1B), and/or permanent well installations (*see e.g.,* FIG. 1C). For each of the boreholes 16A-16N, corresponding cables 15D-15R enable monitoring or interrogation of the magnetic induction sensor 38. Further, the cables may convey power and/or communications to EM sources 37 or other downhole components. At earth's surface, surface interface(s) 14 couple to the cables 15D-15R to receive the EM field measurements from the magnetic induction sensors 38 and to convey the EM field measurements to computer system 20, where analysis operations including cross-well analysis are performed.

In at least some embodiments, the surface interface(s) 14 may include an EM source controller 92 to direct the operations of EM sources 37. Further, the surface interface(s) may include optical monitor(s)/interrogator(s) 94. For optical monitoring operations, light beams generated by the magnetic induction sensors 38 in presence of a magnetic field (a source light beam is not needed) are collected and stored by the optical monitor(s)/interrogator(s) 94. Meanwhile, for optical interrogation operations, source light beams from the optical monitor(s)/interrogator(s) 94 are provided to the magnetic induction sensors 38. Such source light beams are modulated by the magnetic induction sensors 38 in presence of a magnetic field, and the modulated source light beams are collected and stored. For multiplexed optical signals, additional processing is performed by the optical monitor(s)/interrogator(s) 94 to correlate received optical signals with particular magnetic induction sensors 38. Examples of multiplexing that may be used for optical monitoring or optical interrogation operations include time-division multiplexing (TDM), wavelength division multiplexing (WDM), and mode division multiplexing (MDM).

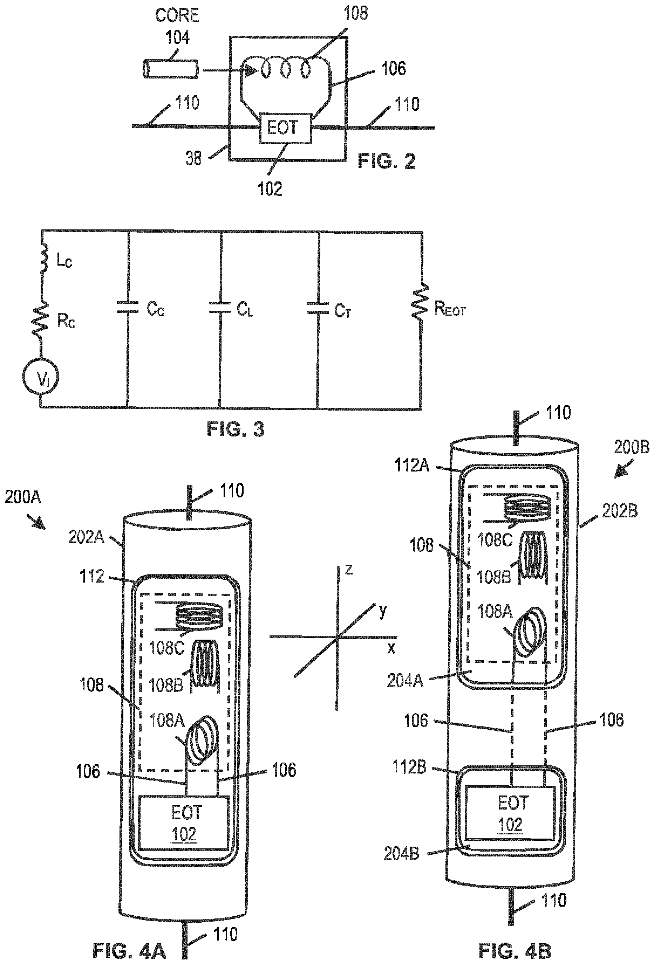

FIG. 2 shows an illustrative magnetic induction sensor 38. As shown, the magnetic induction sensor 38 of FIG. 2 includes a coil 108 (*e.g.,* a solenoid) coupled to an electro-optical transducer 102 via a conductive line 106. In at least some embodiments, a magnetically-permeable core 104 (*e.g.,* a ferrite core or Mu metal core) may be positioned in the coil 108 to enhance the voltage induced in the coil 108 by an EM field. The electro-optical transducer 102 couples to an optical fiber 110 (*e.g*., part of cable 15) that conveys EM field measurements to the surface interface 14. In different embodiments, the electro-optical transducer 102, generates a light beam or modulates a source light beam in the optical fiber 110 in accordance with a voltage induced in the coil 108 by an EM field. A source light beam, for example, may be emitted from a laser of an optical interrogator 94 (*e.g.,* in surface interface 14 or elsewhere) and conveyed to the optical fiber 110 via cable 15 (*e.g.,* the optical fiber 110 couples to an optical fiber of cable 15).

FIG. 3 shows an illustrative equivalent circuit schematic for a magnetic induction sensor such as the magnetic induction sensor 38 shown in FIG. 2. In FIG. 3, the input resistance of the electro-optical transducer 102 is represented as R_{EOT}. The value of R_{EOT} may be very high (*e.g*., approaching infinity for the sake of analysis). Alternatively, the value of R_{EOT} may be sufficiently low, through the use of a shunt, to load the magnetic induction sensor coil 108. Meanwhile, the inductance, resistance, and capacitance of the coil 108 is respectively L_{C}, R_{C}, and C_{C}. The open-circuit voltage induced in the coil 108 by an EM field is Vᵢ. The combined capacitance of the line 106 connecting the coil 108 and the electro-optical transducer 102 is C_{L}. Further, a capacitor C_{T} may be added to form a parallel resonant circuit with the coil 108.

FIGS. 4A and 4B show illustrative magnetic induction sensor package arrangements 200A and 200B. For package arrangement 200A, the coil 108, the connecting line 106, and the electro-optical transducer 102 are enclosed in a single housing or capsule 202A designed to provide high-pressure high-temperature (HPHT) protection for internal components such as the electro-optical transducer 102, the coil 108, the connecting line 106, etc. As shown, the orientation for the coil 108 may vary (represented as coils 108A-108C) to enable detection of different EM field components (*e.g*., x, y, z direction components). Although not explicitly shown, it should be understood that the electro-optical transducer 102 couples to optical fiber 110, which may extend through opposite ends of the housing 202A.

For package arrangements 200B, the coil 108 and the clectro-optical transducer 102 are enclosed in separate compartments 202A, 202B of a housing or capsule 202B designed to provide high-pressure high-temperature (HPHT) protection. In such case, the connecting line 106 extends between compartments 202A and 202B to connect the coil 108 and the electro-optical transducer 102. The separate components 202A and 202B enable the protection provided for the coil 108 and the electro-optical transducer 102 to be customized. For example, the electro-optical transducer 102 may be more fragile or otherwise susceptible to damage compared to the coil 108. Accordingly, the level of protection provided for the electro-optical transducer 102 by compartment 204B may be higher than the level of protection provided for the coil 108 by compartment 204A. As previously discussed for arrangement 200A, the orientation for the coil 108 in arrangement 200B may vary (represented as coils 108A-108C) to enable detection of different EM field components (*e.g*., x, y, z direction components). Although not explicitly shown, it should be understood that the electro-optical transducer 102 couples to optical fiber 110, which may extend through opposite ends of the housing 202B.

In other embodiments, a plurality of magnetic induction sensors may be enclosed in a single housing or in a housing with multiple compartments. In such embodiments, the different coil orientations represented for arrangements 200A and 200B may be used. For multi-component sensors, each of a plurality of coils 108 (*e.g.,* coils 108A-108C) would be connected to a respective electro-optical transducer 102, which arc each coupled to the same optical fiber (*e.g.,* optical fiber 110). To enable the multi-component measurements to be separated, the transducers may operate at different wavelengths or different fiber modes, or may be separated by internal delay coils and interrogated with pulses. Further, it should be understood that the positioning of the electro-optical transducer 102 and the coil 108 may vary from the example given for arrangements 200A and 200B. For example, the coil 108 may be positioned on any side of the electro-optical transducer 102, and the housing, housing compartments, connecting line 106, and optical fiber 110 may be adjusted accordingly.

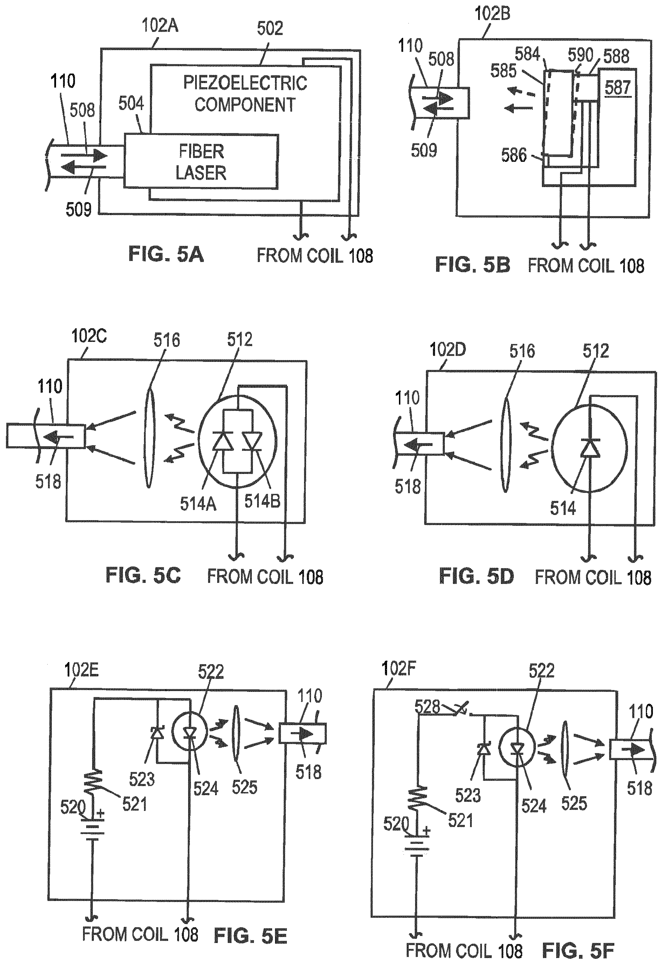

Various electro-optical transducers 102A-102L are illustrated in FIGS. 5A-5L. The electro-optical transducers 102A-102L may correspond to any of the electro-optical transducers 102 described for FIGS. 2, 3, 4A, and 4B. More specifically, the electro-optical transducers 102A, 102B, and 102I-102L are configured to modulate a source light beam in an optical fiber in accordance with a voltage induced in a coil by an EM field. Accordingly, an optical interrogation scheme is used for magnetic induction sensors that employ any of the transducers 102A, 102B, and 102I-102L. Such optical interrogation schemes may vary according to the type of electro-optical transducer being used (*i.e.,* optical interrogation for transducer 102A may vary from optical interrogation for transducer 102B, and so on) as well as signal multiplexing options, but generally involve providing one or more source light beams and monitoring modulated source light beams. In contrast, electro-optical transducers 102C-102H are configured to generate a light beam in an optical fiber in accordance with a voltage induced in a coil by an EM field. Accordingly, an optical monitoring scheme is used for magnetic induction sensors that employ any of the transducers 102C-102H. Such optical monitoring schemes may vary according to the type of electro-optical transducer being used (*i.e.,* optical monitoring for transducer 102C may vary from optical monitoring for transducer 102D, and so on) as well as signal multiplexing options, but generally involve monitoring generated light beams rather than modulating source light beams.

In FIG. 5A, the electro-optical transducer 102A employs an inverse piezoelectric effect to induce strain in a fiber laser. More specifically, the electro-optical transducer 102A includes a piezoelectric component 502 coupled to the coil 108 and bonded to a fiber laser 504. In some embodiments, the piezoelectric component 502 corresponds to a PZT (lead zirconate titanate) stack . Meanwhile, the fiber laser 504 may correspond to a length of single mode, photosensitive erbium-doped fiber (EDF) within which a Bragg grating is formed. Each end of the doped fiber is spliced to a passive fiber and the erbium is pumped with a semiconductor laser preferably around 1480 nm. The emission wavelength is determined primarily by the pitch of the grating and can be set within the erbium window (1525-1560nm). The laser structure supports a single fundamental mode, and thus emits a fundamental frequency.

In operation, the fiber laser 504 is configured to lase at an emission wavelength determined by the pitch of the grating, through the source light beam 508 received via optical fiber 110 (*e.g*., from optical interrogator 94). The pitch of the grating changes according to the amount of strain applied to the fiber laser 504 by the piezoelectric component 502 due to a voltage induced in coil 108 by an EM field. Accordingly, the fiber laser 504 undergoes a shift in the lasing frequency, where the shift is determined by the strain induced. In other words, the frequency shift is converted into an interferometric phase shift corresponding to the voltage induced in coil 108 by an EM field. In some embodiments, the strain induced on the fiber laser 504 may be on the order of pico-strain for a voltage signal of 5 uV from the coil 108. (Fiber laser strain sensing is capable of resolving strains as low as pico-strain.). For more information regarding fiber laser interrogation, reference may be had to Cranch et al., Distributed Feedback Fiber Laser Strain Sensors, IEEE sensors Journal, Vol. 8, No. 7 July 2008. For monitoring scenarios, in which optical interrogation is not needed, the laser 202 and coupler 206 shown for system 200 may be omitted.

In FIG. 5B, the electro-optical transducer 102B employs involves a hinged reflective surface that reflects an amount of incident light in response to a voltage induced in coil 108. As shown, the electro-optical transducer 102B includes a mirror clement 584 adapted to move in response to a voltage signal from coil 108 such that an amount of light reflected into optical fiber 110 changes according to a voltage induced in coil 108 by an EM field. The mirror clement 584 includes a reflective surface 585 that reflects light. A hinge clement 586 attaches the mirror element 584 to a base 587 at one edge of the mirror element 584. A mechanism 588 is coupled between a backside surface 590 of the mirror element 584, opposite the reflective surface 585, and the base 587. The mechanism 588 receives the voltage signal from coil 108, and rotates the mirror element 584 about the hinge element 586 accordingly.

In some embodiments, the source light beam 508 to the electro-optical transducer 102B is received from the optical interrogator(s) 94. As an example, optical fiber 110 may correspond to a fiber of a cable (*e.g.,* cables 15A-15R) or a fiber that branches off from the cable to convey source light beam 508 generated by the optical interrogator(s) 94 to the electro-optical transducer 102B. In alternative embodiments, source light beam 508 is received from a light source in situ with the electro-optical transducer 102B. In either case, the source light beam 508 is incident on the reflective surface 585 and the mechanism 588 rotates the mirror element 584 about the hinge element 586 dependent upon a voltage signal from the coil 108. Thus, the amount of light reflected from the reflective surface 585 and entering optical fiber 110 as reflected light 509 changes according to the voltage induced in coil 108 by an EM field. In some embodiments, the reflected light 509 is conveyed to the surface interface 14 via a cable (*e.g*., cables 15A-15R) using a multiplexing option.

In some embodiments, components of the electro-optical transducer 102B, such as the mirror element 584, the hinge element 586, the mechanism 588, and the base 587, are formed on or from a monolithic substrate such as in a microelectromechanical system (MEMS). This may be advantageous in that the electro-optical transducer 102B can be made less susceptible to mechanical shocks generated in a downhole environment. For example, a monolithic silicon substrate may form the base 587. The mirror clement 584 may be a cantilever structure etched or machined from the silicon substrate, where the hinge element 586 is the remaining silicon that connects the mirror element 584 to the silicon substrate. A reflecting layer may be deposited on an outer surface of the mirror element 584, forming the reflective surface 585.

The mechanism 588 may employ electrical attraction and repulsion to rotate the mirror element 584 about the hinge element 586 dependent upon the voltage signal from the coil 108. A first conductive layer may be deposited or otherwise formed on the backside surface 590 of the mirror element 584. A second conductive layer may be deposited or otherwise formed on a surface of the silicon substrate adjacent the first conductive layer. The voltage signal from the coil 108 may be applied to the first and second conductive layers such that electrical repulsion between the first and second conductive layers causes the mirror element 584 to rotate about the hinge element 586 in a direction away from the substrate. Conversely, the mirror element 584 can be caused to rotate toward the substrate if the conductive layers are driven at opposite polarities to provide electrical attraction.

In FIGS. 5C-5H, electro-optical transducers 102C-102H employ light-emitting diode (LED) configurations to generate a light beam in an optical fiber 110 in response to a voltage signal induced in coil 108 by en EM field. Where an LED is employed, it may be operated in the very low-power regime (20-100 microamps) to keep the diode near ambient temperature. Due to quantum effects, the LED will generally still radiate sufficient photons for reliable communication with surface interface 14. The electro-optical transducers 102C-102H may be advantageous in that they do not require optical interrogator(s) 94 to provide a source light beam (only optical monitoring of the generated light beams is needed).

In the embodiment of FIG. 5C, the electro-optical transducer 102C includes a light source 512 coupled to a coil 108 and generating light in relation to the amount of voltage induced in coil 108 by an EM field. The light source 512 includes a pair of LEDs 514A and 514B in an antiparallel arrangement. Other suitable light sources include semiconductor diode lasers, superluminescent diodes, and incandescent lamps. The electro-optical transducer 102C also includes a lens 516 that directs at least some of the generated light 518 produced by the light source 512 into the optical fiber 110 associated with the electro-optical transducer 102C. One of the LEDs (*e.g*., 514A) is energized by a positive voltage peak, whereas the other is energized by a negative voltage peak.

In the embodiment of FIG. 5D, the electro-optical transducer 102D includes light source 512 coupled to a coil 108 and generating light in relation to the amount of voltage induced in coil 108 by an EM field. The illustrated light source 512 includes LED 514. Other suitable light sources include semiconductor diode lasers, and superluminescent diodes. The electro-optical transducer 102D also includes lens 516 that directs at least some of the light produced by the light source 512 into the optical fiber 110 associated with the electro-optical transducer 102D. The LED 514 is energized by a voltage peak (*e.g.,* a positive voltage peak). During a sense operation of the coil 108, the LED 514 sends generated pulse 518 along optical fiber 110 to the surface interface 14.

In FIG. 5E, the electro-optical transducer 102E includes a voltage source 520, a resistor 521, a light source 522, and a Zener diode 523. The light source 522 includes an LED 524. The voltage source 520, the resistor 521, the LED 524, and a coil 108 arc connected in series, forming a series circuit. Those of ordinary skill in the art will recognize that the arrangement of electrical elements in a series circuit can generally be varied without affecting operability. The illustrated voltage source 520 is a direct current (DC) voltage source having two terminals, and one of the two terminals of the voltage source 520 is connected to one end of the coil 108. As shown, the LED 524 has two terminals, one of which is connected to the other of the two ends of the coil 108. The resistor 521 is connected between the voltage source 520 and the LED 524 to limit the flow of electrical current through the LED 524.

The voltage source 520 produces a DC bias voltage that improves the responsiveness of the light source 522. The voltage source 520 may be or include, for example, a chemical battery, a fuel cell, a nuclear battery, an ultra-capacitor, or a photovoltaic cell (driven by light received from the surface via an optical fiber). In some embodiments, the voltage source 520 produces a DC bias voltage that causes an electrical current to flow through the series circuit including the voltage source 520, the resistor 521, the LED 524, and the related sensor 308, where the current flow through the LED 524 causes the LED 524 to generate light. An optional lens 525 directs some of the light produced by the LED 524 into optical fiber 110 as light 518. The generated light 518 propagates along the optical fiber 110 to the surface interface 14. The surface interface 14 detects attributes of the generated light 518 received via the optical fiber 110 to recover EM field data. In some embodiments, the generated light 518 produced by the electro-optical transducer 102E has an intensity that varies linearly about the bias point in proportion to a voltage induced in the coil 108 by an EM field.

During a sense operation, the coil 108 generates positive or negative voltage pulses. The voltage pulses are summed with the DC bias voltage produced by the voltage source 520. In some embodiments, a positive voltage pulse produced by the coil 108 causes a voltage across the LED 524 to increase, and the resultant increase in current flow through the LED 524 causes the LED 524 to produce more light (i.e., light with a greater intensity). The DC bias voltage produced by the voltage source 520 causes the generated light 518 produced by the electro-optical transducer 102E to have an intensity that is proportional to the voltage signal induced in the coil 108 by an EM field.

The Zener diode 523 is connected between the two terminals of the LED 524 to protect the LED 524 from excessive forward voltages. Other circuit elements for protecting the light source against large voltage excursions are known and may also be suitable. In some embodiments, the light source 522 may be or include, for example, an incandescent lamp, an arc lamp, a semiconductor laser, or a superluminescent diode. The DC bias voltage produced by the voltage source 520 may match a forward voltage threshold of one or more diodes in series with the light source 522.

In FIG. 5F, the electro-optical transducer 102F includes some elements shown and described in previous figures, and similarly labeled. As shown, the electro-optical transducer 102F includes a switch 528 in the series circuit including the voltage source 520, the resistor 521, the LED 524, and the related sensor 308. When the switch 528 is closed, current may flow through the series circuit. When the switch 528 is open, current cannot flow through the series circuit, and the LED 524 does not produce light. The switch 528 may be operated to conserve electrical energy stored in the voltage source 520. For example, the switch 528 may be opened when the EM sensing system a particular sensor zone is not in use.

In some embodiments, the switch 528 may be opened and closed at a relatively high rate, for example between 50 and 5,000 times (cycles) per second. The ratio of the amount of time that the switch 528 is closed during each cycle to the total cycle time (i.e., the duty cycle) of the switch 528 may also be selected to conserve electrical energy stored in the voltage source 520.

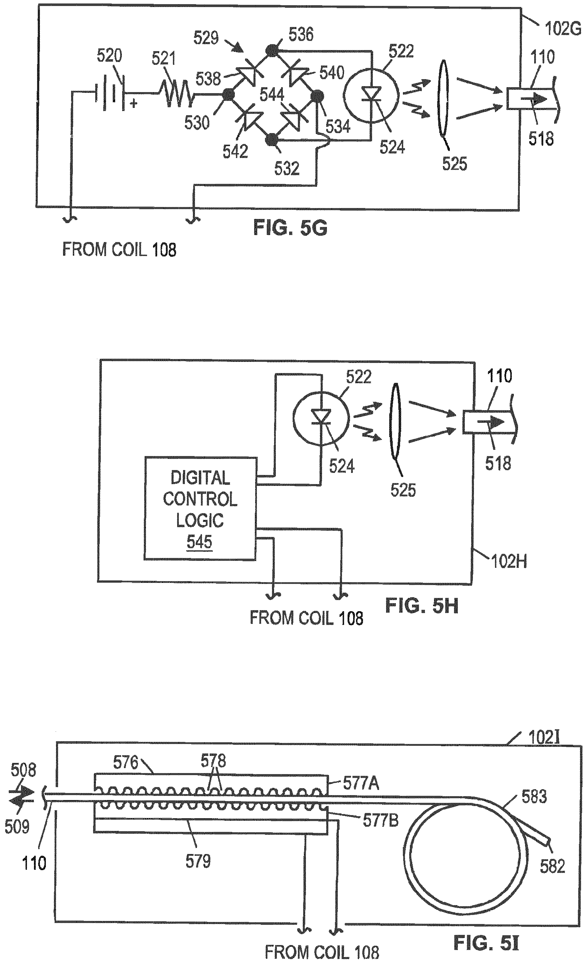

In FIG. 5G, the electro-optical transducer 102G includes some elements shown and described in previous figures, and similarly labeled. As shown, the electro-optical transducer 102G includes the voltage source 520, the resistor 521, a diode bridge 529, and the light source 522 including the LED 524. The diode bridge 529 includes a pair of input nodes 530 and 534, a pair of output nodes 536 and 532, and four diodes 538, 540, 542, and 544. The diode 538 is connected between the input node 530 and the output node 536. The diode 540 is connected between the input node 534 and the output node 536. The diode 542 is connected between the output node 532 and the input node 530. The diode 544 is connected between the output node 532 and the input node 534.

In the embodiment of FIG. 5G, one end of the coil 108 is connected to one terminal of the voltage source 520, and the other end of the coil 108 is connected to the input node 534 of the diode bridge 529. The resistor 521 is connected between the other terminal of the voltage source 520 and the input node 530 of the diode bridge 529. The two terminals of the LED 524 are connected to the output nodes 536 and 532 of the diode bridge 529. The diode bridge 529 provides a rectified version of electrical signals from the coil 108 to the LED 524.

In the embodiment of FIG. 5G, positive and negative voltage pulses induced in the coil 108 are applied to the input nodes 530 and 534 of the diode bridge 529 via the voltage source 520 and the resistor 521. The voltage source 520 overcomes at least a portion of the voltage drop of the diodes 538 and 544 of the diode bridge 529, favoring voltage pulses induced between the ends of the coil 108 that cause current to flow through the diodes 538 and 544. As a result, the LED 524 produces more light for voltage pulses between the ends of the coil 108 that cause current to flow through the diodes 538 and 544 than for voltage pulses between the ends of the related sensor 308 that cause current to flow through the diodes 540 and 542.

In some embodiments, the voltage source 520 produces a DC bias voltage that causes a current to flow through the resistor 521, the diode 538 of the diode bridge 529, the LED 524, the diode 544 of the diode bridge 529, and the coil 108. The resultant current flow through the LED 524 causes the LED 524 to produce light 518.

In other embodiments, the ends of the related sensor 308 are connected to the input nodes 530 and 534 of the diode bridge 529, and the voltage source 520 and the resistor 521 arc connected in series with the LED 524 between the output nodes 536 and 532 of the diode bridge 529. The diode bridge 529 may be considered to perform an operation on the voltage pulses similar to an absolute value function. When a positive voltage pulse is produced between the ends of the related sensor 308 and applied to the input nodes 530 and 534 of the diode bridge 529, the positive pulse is reproduced between the output nodes 536 and 532 (minus diode losses). When a negative voltage pulse is induced in the coil 108 and applied between the input nodes 530 and 534, the negative voltage pulse is inverted and reproduced as a positive voltage pulse between the output nodes 536 and 532 (minus diode losses). The (always positive) voltage pulses produced between the output nodes 536 and 532 of the diode bridge 529 are summed with the DC bias voltage produced by the voltage source 520. Accordingly, both positive and negative voltage pulses induced in the coil 108 cause a voltage across the LED 524 to increase, and the resultant increase in current flow through the LED 524 causes the LED 524 to produce more light (i.e., light with a greater intensity). The generated light 518 produced by the electro-optical transducer 102G has an intensity that is proportional to an absolute value of a magnitude of a voltage signal induced in the coil 108.

In FIG. 5H, the electro-optical transducer 102H includes some elements shown and described in previous figures, and similarly labeled. As shown, the electro-optical transducer 102H includes digital control logic 545 coupled to the coil 108 and to the light source 522 including the LED 524. The digital control logic 545 receives a voltage signal induced in the coil 108 by an EM field, and controls the LED 524 dependent upon the electrical signal.

In some embodiments, the generated light 518 produced by the electro-optical transducer 102H has an intensity that is (approximately) proportional to a magnitude of a voltage signal induced in the coil 108 by an EM field. For example, the digital control logic 545 may control the LED 524 such that the LED 524 produces a first amount of light (i.e., light with a first intensity) when the voltage induced in the coil 108 is substantially zero, a second amount of light (i.e., light with a second intensity) that is greater than the first amount/intensity when a positive voltage pulse is induced in the coil 108, and a third amount of light (i.e., light with a third intensity) that is less than the first amount/intensity when a negative voltage pulse is induced in the coil 108.

In some embodiments, the digital control logic 545 may control the LED 524 dependent upon one or more stored threshold voltage values. For example, a first threshold voltage value may be a positive voltage value that is less than an expected positive peak value, and a second threshold value may be a negative voltage value that is less than an expected negative peak value. The digital control logic 545 may control the LED 524 such that the LED 524 produces the first amount of light (i.e., the first light intensity) when the voltage induced in the coil 108 is between the first threshold voltage value and the second threshold voltage value, the second amount of light (i.e., the second light intensity) when the voltage induced in the coil 108 is greater than the first threshold voltage value, and the third amount of light (i.e., the third light intensity) when the voltage induced in the coil 108 is greater than (more negative than) the second threshold voltage.

In other embodiments, the digital control logic 545 may control the LED 524 such that a pulse rate of light produced by the LED 524 is dependent the voltage signal induced in the coil 108. For example, the digital control logic 545 may control the LED 524 such that the LED 524 produces light: (i) at a first pulse rate when the voltage induced in the coil 108 is between the first threshold voltage value and the second threshold voltage value, (ii) at a second pulse rate when the voltage induced in the coil 108 is greater than the first threshold voltage value, and (iii) at a third pulse rate when the voltage induced in the coil 108 is greater than (more negative than) the second threshold voltage.

In other embodiments, the digital control logic 545 may control the LED 524 such that durations of light beams generated by the LED 524 are dependent on the voltage signal induced in the coil 108. For example, the digital control logic 545 may control the LED 524 such that the LED 524 produces light pulses having: (i) a first duration when the voltage induced in the coil 108 is between the first threshold voltage value and the second threshold voltage value, (ii) a second duration when the voltage induced in the coil 108 is greater than the first threshold voltage value, and (iii) a third duration when the voltage induced in the coil 108 is greater than (more negative than) the second threshold voltage.

In FIGS. 5I-5L, electro-optical transducers 102I-102L modulate source light beams in response to a voltage signal induced in a coil 108 by an EM field. The source light beams may be provided, for example, by optical interrogator(s) 94 in surface interface 14. Source light beams also may be provided by downhole tools or components. The source light beam modulation provided by electro-optical transducers 102I-102M in response to a voltage signal induced in a coil 108 by an EM field may include, for example, time delays, phase changes, or intensity changes. It should be appreciated that the electro-optical transducers 102I-102L may be employed with interrogation schemes that vary with regard to source light beam attributes (*e.g*., frequency components, duration, intensity, etc.), modulation monitoring options (*e.g*., time delays, phase changes, or intensity changes, and/or signal multiplexing options (*e.g.,* TDM, WDM, and/or MWM).

In FIG. 5I, signal transformation involves using a microbend component that strains an optical fiber in response to a voltage signal. More specifically, electro-optical transducer 1021 exploits a light-leakage characteristic of optical fibers. Optical fibers typically include a transparent core surrounded by a transparent cladding material having a lower index of refraction, so that light propagating fairly parallel to the fiber's axis is trapped in the core by the phenomenon of total internal reflection. If bent too sharply, however, the angle between the light's propagation path and the cladding interface is no longer sufficient to maintain total internal reflection, enabling some portion of the light to escape from the fiber.

This light leakage characteristic can be exploited with a microbend sensor or microbender 576 such as that shown in FIG. 5I. The microbender 576 includes a pair of opposed ridged elements 577A and 577B, each having a row of ridges 578 in contact with an outer surface of the optical fiber 110. The optical fiber 110 is positioned in a gap between the ridged elements 577A and 577B. The ridges (teeth) 578 of the ridged elements 577A and 577B are aligned so as to intermesh. In other words, ridges on one element align with valleys in the other element and vice versa. A force or pressure that urges the ridged elements 577A and 577B toward one another causes small bends or "microbends" at multiple locations along the optical fiber 110. As a result, light propagating along the optical fiber 110 is attenuated by an amount dependent upon the force or pressure that urges the ridged elements 577A and 577B toward one another.

For the electro-optical transducer 1021, the ridged element 577B is mounted on a piezoelectric substrate 579 that exhibits a change in dimensions when a voltage is applied between its upper and lower surfaces. The leads from a coil 108 apply a rectified voltage signal to the upper and lower surfaces of the piezoelectric substrate 579, causing the gap to briefly close in response to the voltage signal induced in the coil 108 by an EM field.

In some embodiments, optical interrogator(s) 94 in surface interface 14 includes a light source that conveys lights via optical fiber 110 to the electro-optical transducer 102I as source light 508. When the source light beam 508 traveling in the optical fiber 110 reaches an end or terminus 582 of the optical fiber 110, a portion of the light is reflected at the terminus 582 as reflected light 509. The reflected light 509 is conveyed by the optical fiber 110 to the surface interface 14, which may monitor the intensity of the reflected light 509 as a measurement of the related sense operations. The terminus 582 may or may not have a reflective layer or coating (i.e., a mirrored terminus).

In alternative embodiments, the surface interface 14 may include an optical time domain reflectometer (OTDR) system that generates the source light beam 508 as pulses of light, and monitors the light scattered back to the surface from imperfections along the length of the fiber. The time required for scattered light to reach the receiver is directly proportional to the position along the fiber where the scattering occurred. Thus, the OTDR system sees scattered light from increasingly distant positions as a function of time after the light pulse is transmitted. The increasing distance causes the intensity of the scattered light to show a gentle decrease due to attenuation in the fiber. Though not the subject of the present application, the characteristics of the scattered light can be monitored to provide distributed sensing of temperature and/or pressure along the length of the fiber.

A microbender arrangement in FIG. 5I, however, will create a sudden change in the scattered light intensity and the scattered light from more distant positions in the fiber will be severely attenuated. The OTDR system can readily measure this attenuation to monitor the voltage signal induced in the coil 108 by an EM field, provided that the optical fiber 110 is provided with a "pigtail" 583 between the microbender 576 and the terminus 582. A length of the pigtail 583 is preferably greater than half a minimum distance resolution of the OTDR system of the surface interface 14. For example, if a minimum distance resolution of the OTDR system is 3.3 feet (1.0 meter), the length of the pigtail 583 is preferably greater than 1.6 feet (0.5 meter). A selected minimum length of the pigtail 583 may be, for example, 3.3 feet (1.0 meter), but greater lengths arc easily employed.

When a pulse of the source light beam 508 is generated, the scattered light follows a baseline curve as a function of position along the fiber 110, and the intensity the reflected light 509 is expectedly at a relative maximum value. However, during sense operations of the coil 108, the voltage signal induced in the coil 108 by an EM field results in the microbender gap shrinking and causing attenuation of the light passing therein. The scattered light observable by an OTDR system will have a substantial deviation from the baseline curve, and the intensity of reflected light 509 from the fiber terminus 582 will be greatly reduced.

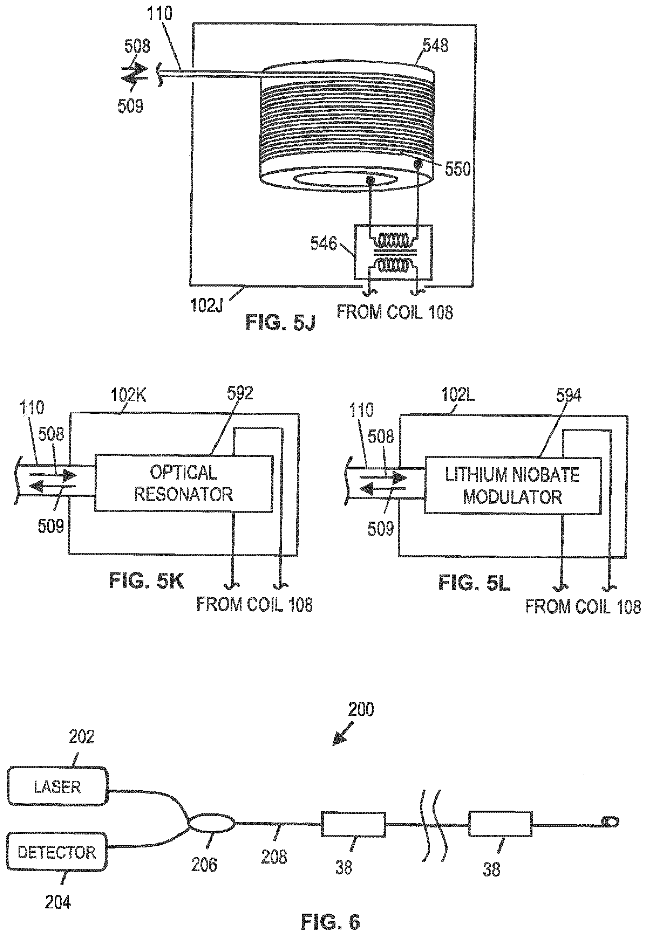

In FIG. 5J, signal transformation involves using a piezoelectric component that lengthens an optical fiber in response to a voltage signal. As shown, electro-optical transducer 102J includes an (optional) impedance matching transformer 546 coupled between the coil 108 and the drive electrodes of a cylinder 548 of piezoelectric material. The impedance matching transformer 546 provides an efficient way to scale the voltage induced in the coil 108 to match the drive requirements for the piezoelectric cylinder, and may further scale the equivalent impedance of the piezoelectric cylinder to match that of the coil 108 to facilitate an efficient energy transfer.

The piezoelectric cylinder 548 is a hollow cylinder with an inner surface electrode and an outer surface electrode. The piezoelectric material is a substance that exhibits the reverse piezoelectric effect: the internal generation of a mechanical force resulting from an applied electrical field. Suitable piezoelectric materials include lead zirconate titanate (PZT), lead titanate, and lead metaniobate. For example, lead zirconate titanate crystals will change by about 0.1% of their static dimension when an electric field is applied to the material. The piezoelectric cylinder 548 is configured such that a diameter of the outer surface of the piezoelectric cylinder 548 changes when an electrical voltage is applied between the inner and outer surfaces. As a result, the diameter of the outer surface of the piezoelectric cylinder 548 is dependent on the voltage induced in the coil 108 by an EM field.

In the embodiment of FIG. J, a terminal portion of the optical fiber 110, including an end or terminus 550 of the optical fiber 110, is wound around the outer surface of the piezoelectric cylinder 548. The terminal portion of the optical fiber 110 is tightly wound around the outer surface of the piezoelectric cylinder 548 such that the terminal portion of the optical fiber 110 is under some initial mechanical stress. The terminus 550 is preferably attached to the outer surface of the piezoelectric cylinder 548, and may or may not have a mirrored coating or layer to reflect light (i.e., a mirrored terminus). Even in the absence of a mirrored coating, the terminus 550 may be expected to reflect a significant fraction of the incident light due to an index of refraction mismatch with the air. As the cylinder's diameter expands or contracts, so too does the cylinder's circumference, thereby stretching the length of the terminal portion of the optical fiber 110 accordingly. Any stretching of the optical fiber 110 also increases the mechanical stress being imposed on the fiber 110. These two effects combine to increase the optical path length for source light 508 traveling to the terminus 550 and for reflected light 509 traveling from the terminus 550.

In FIG. 5K, signal transformation involves using an optical resonator to shift the wavelength of incident light in response to a voltage signal. In the embodiment of FIG. 5L, the electro-optical transducer 102L includes an optical resonator 592 that adjusts the size of an optical resonance cavity dependent upon the voltage signal induced in a coil 108 by an EM field. Thus, source light 508 entering the optical resonator 592 is affected accordingly, and the wavelength of light entering optical fiber 110 as reflected light 509 changes in response to sense operations of the coil 108. In some embodiments, light may pass through optical resonator 592 (instead of being reflected) in route to surface interface 14.

In FIG. 5L, the electro-optical transducer 102L performs signal transformation using a lithium niobate modulator 594 to modulate the phase of a source light beam 508 in response to a voltage signal induced in a coil 108. In at least some embodiments, an intrinsic Fabry-Perot method can be used for optical interrogation of the electro-optical transducer 102L. For more information regarding suitable interrogation methods reference may be had to Yoshino et al., Fiber-Optic Fabry-Perot Interferometer and its Sensor Applications, IEEE Trans of Microwave Theory and Techniques, Vol. 30, Issue 10, 1982.

As previously mentioned, a plurality of magnetic induction sensors 38 can be deployed along the same optical fiber and interrogated or monitored through at least one method of multiplexing. FIG. 6 shows an illustrative optical interrogation system 200. In system 200, various optical magnetic field sensor units 38 are distributed along optical fiber(s) 208 or a corresponding cable (*e.g*., cable 15). The optical fiber(s) 208 is coupled to a laser 202 and a detector 204 via a coupler 206. In at least some embodiments, the laser 202 and the detector 204 are part of a surface interface 14 (*see e.g.,* FIGS. 1A-1D). In operation, the magnetic induction sensors 38 modulate source light beams emitted by the laser 202 in accordance with a magnetic field at the location of each of the sensor units 38. The detector 204 receives the modulated source light beams and recovers magnetic field measurements. The laser 202, the detector 204, the sensor units 38, and/or the optical fiber(s) 208 may be configured for multiplexing options such as TDM, WDM, and/or MDM. In principle the number of optical magnetic field sensor units 38 in system 200 is only limited by the attenuation of light propagating along the optical fiber(s) 208. Certain contemplated embodiments include hundreds of magnetic induction sensors 38 along a given optical fiber 208.

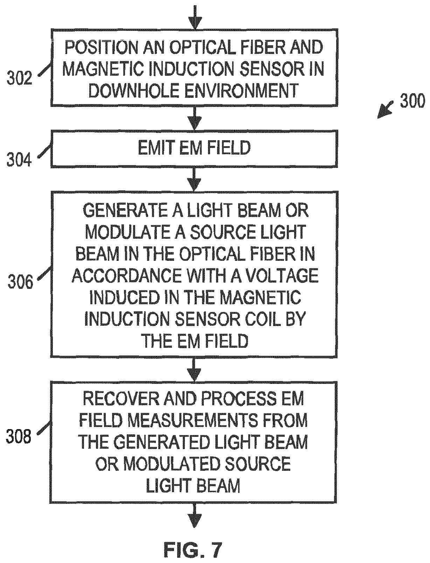

FIG. 7 is a flowchart of an illustrative EM field monitoring method 300. In method 300, an optical fiber (*e.g*., an optical fiber within cable 15, optical fiber 110, or optical fiber 208) and magnetic induction sensor (*e.g*., sensors 38, 202A, or 202B) are positioned in a downhole environment (block 302). For the example, the positioning of the optical fiber and the magnetic induction sensor may correspond to temporarily positioning the optical fiber and the magnetic induction sensor in a downhole position using a LWD tool (*e.g.,* tool 36) or wireline tool string (*e.g.,* string 60). For example, the optical fiber and magnetic induction sensor may be integrated with a LWD or wireline tool or at least connected to a LWD or wireline tool. Alternatively, the positioning of the optical fiber and the magnetic induction sensor may correspond to permanently positioning the optical fiber and the magnetic induction sensor as part of a well installation (*e.g*., a production well such as well 70, an injection well, or a monitoring well). In at least some embodiments, the optical fiber used for monitoring or interrogating magnetic induction sensors is part of a sensing cable with magnetic induction sensors distributed along the cable. For example, the sensing cable may be strapped to a casing string (*e.g*., casing string 72) as the casing string is assembled and lowered into a borehole before being cemented in place. The installation crew may further complete the well, performing any needed perforation, treatment, equipping, and conditioning operations to optimize production. The well may alternatively be an injection well or a "dry well" created solely for monitoring downhole parameters of interest.

At block 304, an EM field is emitted from an EM source. The EM source may be in the downhole environment or at earth's surface. At block 306, a light beam is generated or a source light beam is modulated (*e.g*., by an electro-optical transducer of the magnetic induction sensor) in the optical fiber in accordance with a voltage induced in the magnetic induction sensor's coil by the EM field. The generated light beam or modulated source light beam conveys an EM field measurement that can be recovered and processed at block 308. For example, block 308 may process EM field measurements to generate a log of EM field measurements, a log of inverted parameters (*e.g*., distribution of resistivity, or the position and movement of fluids), and/or related images. Such logs and/or images can be displayed to a user via a computer system (*e.g*., computer system 20). When multiple magnetic induction sensors are used, the method 300 may employ one or more multiplexing options to distinguish between the EM field information corresponding to the different magnetic induction sensors.

As disclosed EM monitoring systems and methods have low power requirements, making it compliant with various oilfield-related electrical standards including the intelligent well interface standard (IWIS) and particularly suitable for offshore well environments having limited available power from subsea installations. Some disclosed EM monitoring embodiments require no downhole power consumption at all. In at least some embodiments, the transmitters may be located downhole and powered from batteries, downhole turbines, or other integrated power sources. The disclosed EM monitoring system is also suitable for use in acidic or basic high pressure (*e.g.,* 35,000 psi) and high temperature (*e.g.,* >260°C) environments and can tolerate continuous vibration over an extended period.

For EM sources, any suitable antenna configuration may be used including one or more electric monopoles, electric dipoles, magnetic dipoles, and combinations thereof. Typically, EM source configurations using multiple antennas would locate the various antennas at different locations, though some embodiments may employ multiple collocated dipole antennas for multi-component field measurements. Some EM monitoring method and system embodiments may omit the antenna-based EM sources in favor natural EM sources such as telluric currents or spontaneous potentials.

Embodiments disclosed herein include:
A: An EM field measurement system for a downhole environment, where the system comprises an optical fiber, an EM source to emit an EM field, and a magnetic induction sensor. The magnetic induction sensor comprises a coil and an electro-optical transducer coupled to the coil and the optical fiber. The electro-optical transducer generates a light beam or modulates a source light beam in the optical fiber in accordance with a voltage induced in the coil by the EM field.
B: An EM field measurement method for a downhole environment, where the method comprises positioning an optical fiber and magnetic induction sensor in the downhole environment, the magnetic induction sensor having a coil and an electro-optical transducer coupled to the coil and the optical fiber. The method also comprises emitting an EM field and generating a light beam or modulating a source light beam, by the electro-optical transducer, in the optical fiber in accordance with a voltage induced in the coil by the EM field.

Each of the embodiments, A and B, may have one or more of the following additional elements in any combination. Element 1: the electro-optical transducer generates the light beam in the optical fiber using an LED. Element 2: the electro-optical transducer modulates the source light beam in the optical fiber using an electrostrictive material. Element 3: the electrostrive material comprises a lead zirconate titanate (PZT) material or lithium niobate material. Element 4: further comprising a magnetically permeable core for the coil. Element 5: the electro-optical transducer has an input impedance greater than 1 MΩ. Element 6: the electro-optical transducer includes a shunt arrangement to load the coil. Element 7: the coil is unturned and operates below its resonant frequency. Element 8: the magnetic induction sensor comprises a housing that encloses the coil and the electro-optical transducer to provide HPHT protection. Element 9: the housing comprises separate compartments for the coil and the electro-optical transducer. Element 10: further comprising additional magnetic induction sensors distributed along the optic fiber, each magnetic induction sensor having a respective coil and electro-optical transducer. Element 11: further comprising a LWD string or wireline tool string associated with the magnetic induction sensor to adjust a position of the magnetic induction sensor in the downhole environment. Element 12: further comprising a permanent well casing associated with the magnetic induction sensor to maintain a position of the magnetic induction sensor in the downhole environment. Element 13: further comprising a computer that receives and processes measurements provided by the magnetic induction sensor to generate a log for display. Element 14: further comprising an interface unit that performs optical interrogation by providing the source light beam and monitoring the modulated source light beam, or that performs optical monitoring without interrogation by monitoring the generated light beam.

Element 15: positioning an optical fiber and magnetic induction sensor comprises adjusting a position of a LWD string or wireline tool string associated with the magnetic induction sensor. Element 16: positioning an optical fiber and magnetic induction sensor comprises installing a permanent well casing associated with the magnetic induction sensor. Element 17: further comprising receiving and processing measurements provided by the magnetic induction sensor to generate a log for display. Element 18: further comprising positioning multiple magnetic induction sensors in the downhole environment, each magnetic induction sensor having a coil and an electro-optical transducer coupled to the coil and the optical fiber, and applying a signal multiplexing scheme to recover magnetic field measurements from the multiple magnetic induction sensors.

Numerous variations and modifications will become apparent to those skilled in the art once the above disclosure is fully appreciated. For example, the figures show system configurations suitable for reservoir monitoring (particularly in response to enhanced oil recovery operations or steam assisted gravity drainage), but they are also readily usable for treatment operations, cementing operations, and CO₂ or wastewater sequestration monitoring. The ensuing claims are intended to cover such variations where applicable.

The following numbered statements also form part of the present disclosure:
1. An electromagnetic (EM) field measurement system for a downhole environment, the system comprising:
   an optical fiber;
   an EM source to emit an EM field; and
   a magnetic induction sensor with a coil and an electro-optical transducer coupled to the coil and the optical fiber, wherein the electro-optical transducer generates a light beam or modulates a source light beam in the optical fiber in accordance with a voltage induced in the coil by the EM field.
2. The system of 1, wherein the electro-optical transducer generates the light beam in the optical fiber using a light-emitting diode (LED).
3. The system of 1, wherein the electro-optical transducer modulates a source light beam in the optical fiber using an electrostrictive material.
4. The system of 3, wherein the electrostrive material comprises a lead zirconate titanate (PZT) material or lithium niobate material.
5. The system of 1, further comprising a magnetically permeable core for the coil.
6. The system of 1, wherein the electro-optical transducer has an input impedance greater than 1 MΩ.
7. The system of 1, wherein the electro-optical transducer includes a shunt arrangement to load the coil.
8. The system in accordance with any one of 1 to 7, wherein the coil is unturned and operates below its resonant frequency.
9. The system in accordance with any one of 1 to 7, wherein the magnetic induction sensor comprises a housing that encloses the coil and the electro-optical transducer to provide high-pressure high-temperature (HPHT) protection.
10. The system in accordance with any one of 9, wherein the housing comprises separate compartments for the coil and the electro-optical transducer.
11. The system in accordance with any one of 1 to 7, further comprising additional magnetic induction sensors distributed along the optic fiber, each magnetic induction sensor having a respective coil and electro-optical transducer.
12. The system in accordance with any one of 1 to 7, further comprising a logging-while-drilling (LWD) string or wireline tool string associated with the magnetic induction sensor to adjust a position of the magnetic induction sensor in the downhole environment.
13. The system in accordance with any one of 1 to 7, further comprising a permanent well casing associated with the magnetic induction sensor to maintain a position of the magnetic induction sensor in the downhole environment.
14. The system in accordance with any one of 1 to 7, further comprising a computer that receives and processes measurements provided by the magnetic induction sensor to generate a log for display.
15. The system in accordance with any one of 1 to 7, further comprising an interface unit that performs optical interrogation by providing the source light beam and monitoring the modulated source light beam, or that performs optical monitoring without interrogation by monitoring the generated light beam.
16. An electromagnetic (EM) field measurement method for a downhole environment, the method comprising:
   positioning an optical fiber and magnetic induction sensor in the downhole environment, the magnetic induction sensor having a coil and an electro-optical transducer coupled to the coil and the optical fiber;
   emitting an EM field; and
   generating a light beam or modulating a source light beam, by the electro-optical transducer, in the optical fiber in accordance with a voltage induced in the coil by the EM field.
17. The method of 16, wherein said positioning comprising adjusting a position of a logging-while-drilling (LWD) string or wireline tool string associated with the magnetic induction sensor.
18. The method of 16, wherein said positioning comprises installing a permanent well casing associated with the magnetic induction sensor.
19. The method in accordance with any one of 16 to 18, further comprising receiving and processing measurements provided by the magnetic induction sensor to generate a log for display.
20. The method in accordance with any one of 16 to 18, further comprising:
   positioning multiple magnetic induction sensors in the downhole environment, cach magnetic induction sensor having a coil and an electro-optical transducer coupled to the coil and the optical fiber; and
   applying a signal multiplexing scheme to recover magnetic field measurements from the multiple magnetic induction sensors.

## Claims

1. An electromagnetic (EM) field measurement method for a downhole environment, the method comprising:
positioning an optical fiber and magnetic induction sensor in the downhole environment, the magnetic induction sensor having a coil and an electro-optical transducer coupled to the coil and the optical fiber;
emitting an EM field; and
generating a light beam or modulating a source light beam, by the electro-optical transducer, in the optical fiber in accordance with a voltage induced in the coil by the EM field.

2. The method of claim 1, wherein said positioning comprising adjusting a position of a logging-while-drilling (LWD) string or wireline tool string associated with the magnetic induction sensor.

3. The method of claim 1, wherein said positioning comprises installing a permanent well casing associated with the magnetic induction sensor.

4. The method in accordance with any one of claims 1 to 3, further comprising receiving and processing measurements provided by the magnetic induction sensor to generate a log for display.

5. The method in accordance with any one of claims 1 to 3, further comprising:
positioning multiple magnetic induction sensors in the downhole environment, each magnetic induction sensor having a coil and an electro-optical transducer coupled to the coil and the optical fiber; and
applying a signal multiplexing scheme to recover magnetic field measurements from the multiple magnetic induction sensors.
